# EUROPEAN PATENT APPLICATION

(11) **EP 0 601 614 A1**
(43) Date of publication of application: **15.06.1994**
(21) Application number: 93200299.1
(22) Date of filing: 04.02.1993
(51) Int. Cl.: C02F 1/62, C02F 9/00

(54) **Method and device for purifying a fluid flow**

(30) Priority: 04.02.1992 NL 9200205
(71) Applicant: N.V. Kema, NL-6812 AR Arnhem (NL)
(72) Inventor: Enoch, Gerrit Derk, NL-7623 DJ Borne (NL); Beekes, Marinus Leonard, NL-3881 CR Putten (NL)
(74) Representative: Bruin, Cornelis Willem

(57) **Abstract**

The invention relates to a method for purifying a fluid flow, in particular waste water, from which floating dust has been removed, comprising the steps of:
a) removing volatile components from the flow (2,3);
b) subjecting the flow to an oxidation treatment (4);
c) separating the flow into a first sub-flow containing monovalent ions and a second sub-flow containing heavy metals (5);
d) removing fluorides from the first sub-flow by precipitation by means of a calcium salt (8);
e) converting the monovalent ions from the first sub-flow into corresponding acids and bases (10); and
f) recovering the heavy metals in metallic form from the second sub-flow (13).

The different steps of the method can be performed in practice in various ways but a method is preferred wherein the volatile components are removed by a steam stripping process, the oxidation takes place by means of ozone and UV radiation, separation of the flow is performed by means of reverse electrodialysis, the fluorides are separated by precipitation with calcium chloride, the sub-flow containing the monovalent ions is separated into acids and bases by means of bipolar membrane techniques and the heavy metals are precitpitated electrolytically.

The invention further relates to a system of devices for performing the method according to the invention.

It is likewise possible to apply one or more of the different steps alone or in combination with a conventional waste water purification process.

## Description

The present invention relates to a method and device for purifying a fluid flow, in particular waste water.

In a large number of processes such as for instance coal gasification, refuse burning and processes in the chemical and metal industries, large quantities of waste water are released. The waste water can contain different sorts of pollutants such as for example volatile components like NH₃, H₂S, HCN, complex metal cyanides, fluorides, chlorides, solids and organic compounds and the like.

Because discharge of waste water is subject to very strict conditions, it is important to purify the water as much as possible prior to emission. In the present waste water purifying processes volatile components are, inter alia, for instance removed by means of stripping, and condensate, solids, fluorides and heavy metals are separated in the form of sludge by means of flocculation and coagulation. Solid NaCl is created by means of evaporation and crystallization. What remains at evaporation should be a clean condensate that can be used again, for instance in the gasification process. However, such a purifying process has a number of drawbacks. The sludge with fluoride and heavy metals is chemical waste and in addition has a relatively large volume. At the present time metal sludge is dumped but in the future this will no longer be possible. Although in principle the NaCl could be re-used, there is the danger that it is contaminated with fluoride, complexed cyanides and/or heavy metals. In that case the salt will also have to be stored as chemical waste.

It is an object of the present invention to provide a method for purifying a fluid flow, in particular waste water, with which the above stated drawbacks can be avoided.

This is achieved by the invention in a method for purifying a fluid flow from which floating dust has been removed, comprising the steps of:
a) removing volatile components from the flow;
b) subjecting the flow to an oxidation treatment;
c) separating the flow into a first sub-flow containing monovalent ions and a second sub-flow containing heavy metals;
d) removing fluorides from the first sub-flow by precipitation by means of a calcium salt;
e) converting the monovalent ions from the first sub-flow into corresponding acids and bases; and
f) recovering the heavy metals in metallic form from the second sub-flow.

The different steps of the method according to the present invention can be performed in various ways. A preferred embodiment consists however of removing the volatile components by means of a steam stripping process, subjecting the flow to an oxidation treatment by means of ozone and UV radiation, separating the flow into a first sub-flow containing monovalent ions and a second sub-flow containing heavy metals by means of reverse electrodialysis, refining the monovalent ions from the first sub-flow by means of bipolar membranes after optional removal of fluorides by means of a calcium salt such as for instance calcium chloride, and electrolytic precipitation of the heavy metals.

Volatile components such as NH₃, H₂S and HCN are removed from the flow by means of the steam stripping process.

The remaining complexed metal cyanides and organic compounds are subsequently oxidized by means of ozone and UV radiation. Thereafter only ions of sodium, chlorine, fluoride, bicarbonate, ammonium and nitrate have a monovalency.

Only a small number of ammonium ions is present because the major part thereof is already removed in the steam stripper. However, because it is not economically possible to wholly remove the ammonia a small portion thereof remains present in the flow in the form of ammonium ions. During the oxidation reaction ammonium ions are converted to nitrate. The presence of NO₃⁻ is undesirable however, since contamination of the finally formed HCl hereby occurs. Therefore the formation of NO₃⁻ is preferably prevented by selective oxidation. Nitrogen thereby remains substantially present in the form of ammonium ions, which find their way into the finally formed caustic soda. The caustic soda is only used to adjust the pH of the steam stripper. The ammonium is then removed as far as possible again in this stripper.

By means of modified reverse electrodialysis techniques making use of monoanion- and monocation-selective membranes, the Na⁺, NH₄⁺, Cl⁻' F⁻' HCO₃⁻ and NO₃⁻ ions can be separated from the ions with a higher valency. These are all heavy metals after the oxidation process. The flow is hereby split into a first sub-flow containing inter alia the monovalent ions of sodium, chlorine and fluoride and a second sub-flow in which the heavy metals are contained.

After fluoride separation by precipitation with a calcium salt it is possible to separate the sodium chloride solution into sodium hydroxide and hydrochloric acid by means of bipolar membrane techniques. Both the sodium hydroxide and hydrochloric acid can be re-used among other things in a demineralization device or in the waste water purifying treatment according to the invention.

In preference the pH of the ingoing waste water flow from which the floating dust has been removed lies between 7 and 9. The sodium hydroxide and hydrochloric acid recovered in the process can be used to adjust the pH of the waste water flow to the required level.

The second sub-flow contains the heavy metals. These are preferably recovered in metallic form by means of an electrolytic cell. The residual solid metals have a much smaller volume and therefore occupy much less space in storage. There is the optional possibility of further refining the metals.

If desired the use of bipolar membrane techniques for refining the NaCl to the corresponding acids and bases can be omitted. The NaCl recovered from the first sub-flow has a technical quality after fluoride precipitation and does not have to be stored as chemical waste.

It is also conceivable that the specific embodiments of the different steps of the method according to the invention are applied alone or in combination in the conventional waste water purifying processes. The invention therefore further relates to a method for removing complex metal cyanides from a fluid flow, particularly applicable in a purifying process for waste water, by subjecting the fluid flow to an oxidation treatment by means of ozone and UV radiation, a method for separating monovalent ions from a fluid flow, particularly applicable in a purifying process for waste water, by subjecting the fluid flow to a reverse electrodialysis, a method for converting salts of monovalent ions into the corresponding acids and bases, particularly applicable in a purifying process for waste water, comprising the use of bipolar membranes, and a method for recovering heavy metals in metallic form from a fluid flow, particularly applicable in a purifying process for waste water, by means of electrolytic precipitation of the heavy metals.

The invention will be further elucidated with reference to the annexed figure in which a preferred embodiment of the present invention is depicted schematically.

The waste water 1, from which floating dust has been removed in advance, is adjusted if necessary to the required pH by addition of alkali or acid. The waste water 1 is first subjected at 2 to a steam stripping process whereby volatile components 3 are almost entirely removed.

Oxidation of complexed cyanides and organic compounds then takes place at 4 by means of ozone and UV radiation. The wavelength of the UV radiation amounts preferably to between 238 and 580 nm.

Separation thereafter takes place at 5 into two subflows 6 and 7. Use is made at 5 of the so-called reverse electrodialysis technique in which monoanion- and monocation-selective membranes are used. By means of these membranes the monovalent ions, substantially ions of sodium, chloride and fluoride, are separated from the ions with a higher valency. After oxidation these are all heavy metals.

The flow 7 with the monovalent ions can then be refined in different ways. After optional fluoride removal 8 there is the possibility of recovering the NaCl from the flow 9 with the fluoride removed. This NaCl will have at least a technical quality and can therefore be re-used for particular purposes. It is likewise possible to separate the NaCl into hydrochloric acid 11 and caustic soda 12 by means of bipolar membrane techniques 10. Both substances can be re-used, for instance to bring the pH of the waste water flow up to the required level or in a demineralization device.

The second sub-flow 6 is further refined at 13 by recovering in metallic form 14 the metal ions present therein. This can be carried out for instance by means of an electrolytic cell.

The present invention further provides the possibility of applying the separate steps of the method alone or in combination in conventional purifying processes.

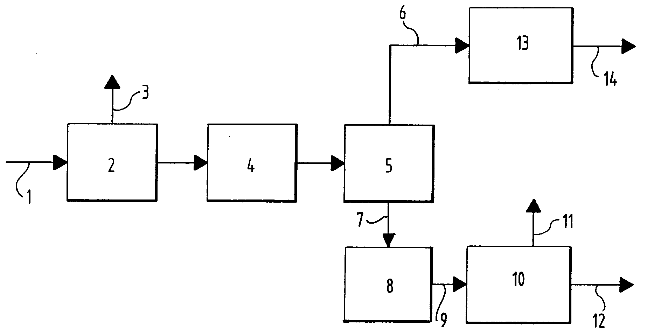

## Claims

1. Method for purifying a fluid flow, in particular waste water, from which floating dust has been removed, comprising the steps of:
a) removing volatile components from the flow;
b) subjecting the flow to an oxidation treatment;
c) separating the flow into a first sub-flow containing monovalent ions and a second sub-flow containing heavy metals;
d) removing fluorides from the first sub-flow by precipitation by means of a calcium salt;
e) converting the monovalent ions from the first sub-flow into corresponding acids and bases; and
f) recovering the heavy metals in metallic form from the second sub-flow.

2. Method as claimed in claim 1, **characterized in that** the calcium salt is calcium chloride.

3. Method as claimed in either of the claims 1-2, **characterized in that** the volatile components are removed from the flow by means of a steam stripping process.

4. Method as claimed in any of the claims 1-3, **characterized in that** the flow is subjected to an oxidation treatment by means of ozone and UV radiation.

5. Method as claimed in claim 4, **characterized in that** the wavelength of the UV radiation lies between 238 and 580 nm.

6. Method as claimed in any of the claims 1-5, **characterized in that** the flow is separated into a first sub-flow containing monovalent ions and a second sub-flow containing heavy metals by means of reverse electrodialysis.

7. Method as claimed in any of the claims 1-6, **characterized in that** the monovalent ions from the first sub-flow are refined by means of bipolar membranes to corresponding acids and bases.

8. Method as claimed in claims 1-7, **characterized in that** the heavy metals are precipitated electrolytically.

9. Method as claimed in claims 1-8, **characterized in that** the formed acids and/or bases are re-used in the purifying method.

10. Method for removing complex metal cyanides from a fluid flow, particularly applicable in a purifying process for waste water, by subjecting the fluid flow to an oxidation treatment by means of ozone and UV radiation.

11. Method as claimed in claim 10, **characterized in that** the wavelength of the UV radiation lies between 238 and 580 nm.

12. Method for separating monovalent ions from a fluid flow, particularly applicable in a purifying process for waste water, by subjecting the fluid flow to a reverse electrodialysis.

13. Method for converting salts of monovalent ions into the corresponding acids and bases, particularly applicable in a purifying process for waste water, comprising the use of bipolar membranes.

14. Method for recovering heavy metals in metallic form from a fluid flow, particularly applicable in a purifying process for waste water, by electrolytic precipitation of the heavy metals.

15. System of devices for applying the method as claimed in any of the claims 1-9, comprising a device for removing volatile components from the flow, an oxidation device, a device for separating the flow into a first subflow containing monovalent ions and a second sub-flow containing heavy metals, a device for converting monovalent ions from the first sub-flow into corresponding acids and bases and/or non-soluble salts and a device for recovering the heavy metals in metallic form from the second sub-flow.

16. System as claimed in claim 15, **characterized in that** the device for removing volatile components is a steam stripper.

17. System as claimed in claim 15 or 16, **characterized in that** the oxidation device comprises an UV radiation source and supply means for ozone.

18. System as claimed in any of the claims 15-17, **characterized in that** the device for separating the flow into a first sub-flow containing monovalent ions and a second sub-flow containing heavy metals is a reverse electrodialysis device provided with anion- and cation-specific membranes.

19. System as claimed in any of the claims 15-18, **characterized in that** the device for converting the monovalent ions from the first sub-flow into corresponding acids and bases comprises at least one bipolar membrane.

20. Device as claimed in any of the claims 15-19, **characterized in that** the device for recovering the heavy metals in metallic form from the second sub-flow is an electrolytic cell.
